# FASCICULE DE BREVET EUROPEEN

(11) **EP 2 648 825 B1**
(45) Date de publication et mention de la délivrance du brevet: **02.08.2017**
(21) Numéro de dépôt: 11801803.5
(22) Date de dépôt: 01.12.2011
(51) Int. Cl.: B01D 53/047, C21B 5/06, C21B 7/00, B01D 53/00

(54) **PROCEDE DE PRODUCTION D'UN FLUIDE ENRICHI EN DIOXYDE DE CARBONE A PARTIR D'UN GAZ RESIDUAIRE D'UNE UNITE SIDERURGIQUE**
VERFAHREN ZUR HERSTELLUNG EINES MIT KOHLENDIOXID AUS EINEM ABGAS EINER EISENMETALLURGISCHEN EINHEIT ANGEREICHERTEN FLUIDS
METHOD FOR PRODUCING A FLUID ENRICHED WITH CARBON DIOXIDE FROM A WASTE GAS OF A FERROUS-METALLURGY UNIT

(30) Priorité: 08.12.2010 FR 1060250
(43) Date de publication de la demande: 16.10.2013
(73) Titulaire: L'Air Liquide Société Anonyme pour l'Etude et l'Exploitation des Procédés Georges Claude, 75007 Paris (FR)
(72) Inventeur: BRIGLIA, Alain, F-49140 Corze (FR); DE CAYEUX, Olivier, F-94130 Nogent SurMarne (FR); DUBETTIER-GRENIER, Richard, F-94210 La Varenne Saint Hilaire (FR); GUILLARD, Alain, F-75016 Paris (FR); TRAVERSAC, Xavier, F-75012 Paris (FR); SZAMLEWSKI, Christophe, F-77380 Combs La Ville (FR)
(74) Mandataire: Mercey, Fiona Susan
(86) Numéro de dépôt international: PCT/FR2011/052836
(87) Numéro de publication internationale: WO 2012/076786

(56) Documents cités:
- WO-A2-2006/106253
- FR-A1- 2 848 123
- US-A1- 2003 047 037
- DANLOY G ET AL: "ULCOS - Pilot testing of the low-CO2 blast furnace process at the experimental BF in Luleaa", REVUE DE METALLURGIE - CAHIERS D'INFORMATIONS TECHNIQUES, REVUE DE METALLURGIE. PARIS, FR, vol. 106, no. 1, 1 January 2009 (2009-01-01), pages 1-8, XP001521800, ISSN: 0035-1563, DOI: 10.1051/METAL/2009008

## Description

La présente invention est relative à un procédé de production d'un fluide enrichi en dioxyde de carbone à partir d'un gaz résiduaire d'une unité sidérurgique, par exemple un résiduaire de haut fourneau, d'appareil MIDREX, DRI ou COREX ®.

Cette invention pallie les défauts des procédés de l'art antérieur et en particulier contribue à
- réduire les émissions riches en monoxyde de carbone
- réduire la consommation de coke pour le haut fourneau
- augmenter la productivité du haut fourneau
- simplifier les machines tournantes de l'appareil
- faciliter la régulation
- éviter de dégrader la consommation d'énergie
pour un procédé de captage de CO₂ sur unité sidérurgique, éventuellement avec recyclage.

Comme le compresseur en amont de l'unité d'adsorption fonctionne à taux de compression substantiellement constant, si la pression du résiduaire de l'unité sidérurgique varie, ceci entraîne une réduction de pression en amont de l'unité d'adsorption. Le procédé selon l'invention permet que l'unité d'adsorption puisse accepter ces pressions d'entrée différentes avec un bon rendement intrinsèque pour le CO et un rendement global en CO proche de 100%, grâce en particulier au gaz de recyclage.

Le fluide enrichi en dioxyde de carbone contient, par exemple, au moins 70% mol. de dioxyde de carbone et peut être sous forme gazeuse ou liquide.

Il est connu de WO-A- 2006/106253 d'utiliser un procédé d'adsorption suivi d'un procédé d'épuration par distillation pour produire un gaz riche en dioxyde de carbone et un gaz résiduaire enrichi en monoxyde de carbone.

FR-2848123 décrit un procédé de séparation d'un gaz résiduaire d'une unité sidérurgique par lavage aux amines. Les procédés de lavage aux amines ne peuvent fonctionner avec un débit d'alimentation dont la pression varie.

US2003/0047037 décrit un procédé de séparation d'un gaz résiduaire d'une unité sidérurgique par adsorption, utilisant un gaz de purge qui est du gaz naturel et produisant uniquement des débits destinés à être mélangés avec du gaz naturel et envoyés à l'unité sidérurgique.

« ULCOS-Pilot testing of the low-CO2 Blast Furnace process at the experimental BF in Lulea » , La Revue de Métallurgie, CIT, janvier 2009, décrit un procédé de séparation de gaz provenant d'un haut fourneau utilisant un VPSA qui produit un gaz appauvri en dioxyde de carbone qui est recyclé aux tuyères.

Le gaz résiduaire provenant du haut fourneau a une pression variable en fonction du taux de charge de l'installation. Ces variations sont typiquement supérieures à 1 bar, ce qui n'est pas acceptable par les technologies actuelles de machines commerciales tout en maintenant une pression constante de refoulement vers le PSA. Il est à noter que la pression du haut fourneau et débit molaire du gaz résiduaire varient de façon sensiblement proportionnelle, conduisant à un débit volumique quasi constant à l'aspiration de la machine de compression du gaz de gueulard.

Selon l'invention, on laisse donc varier la pression du gaz résiduaire reçu par l'unité d'adsorption. L'unité d'adsorption est conçue pour séparer un gaz à une première pression, mais peut également fonctionner avec un rendement moindre à une deuxième pression inférieure d'au moins 2 bars à la première pression.

Selon un objet de l'invention, il est prévu un procédé selon la revendication1. Selon d'autres objets facultatifs :
- au moins une partie du gaz de recyclage est recyclée à l'unité d'adsorption à une pression substantiellement égale à celle du refoulement du premier compresseur pour être séparée dans l'unité d'adsorption
- on comprime le gaz enrichi en dioxyde de carbone dans un deuxième compresseur en amont de l'unité de séparation ou on comprime le gaz de recyclage entre l'unité de séparation et l'unité d'adsorption.
- l'unité de séparation opère à une température en dessous de 0°C par au moins une étape de refroidissement suivie d'au moins une étape de séparation de phases, pouvant être par exemple une unité de distillation.
- on maintient la deuxième et éventuellement la première pression substantiellement constante en ajustant la pression de sortie du premier compresseur, au moyen d'une soufflante connectée en amont de celui-ci.
- on ajuste la pression de sortie du premier compresseur en envoyant le gaz résiduaire dans un stockage en amont du premier compresseur et en alimentant le premier compresseur à partir du stockage.
- on modifie la pression du gaz de recyclage pour qu'il soit à une pression plus élevée pendant la première marche et une pression plus basse pendant la deuxième marche.
- l'unité d'adsorption a un premier rendement de séparation de monoxyde de carbone pendant la première marche et un deuxième rendement de séparation de monoxyde de carbone pendant la deuxième marche, inférieur au premier rendement.
- le gaz résiduaire sort de l'unité sidérurgique avec une pression variable.
- l'au moins une partie du gaz appauvri en dioxyde de carbone est envoyée à l'unité sidérurgique ou une autre unité sidérurgique, sans l'avoir mélangée avec un autre fluide.
- on mélange le gaz de recyclage au gaz résiduaire, éventuellement séché, en amont de l'unité d'adsorption.

L'invention sera décrite en plus de détail en se référant aux figures qui représentent des procédés selon l'invention.

Un fluide riche en CO₂ peut contenir au moins 30% mol. de dioxyde de carbone, ou au moins 50% mol. de dioxyde de carbone.

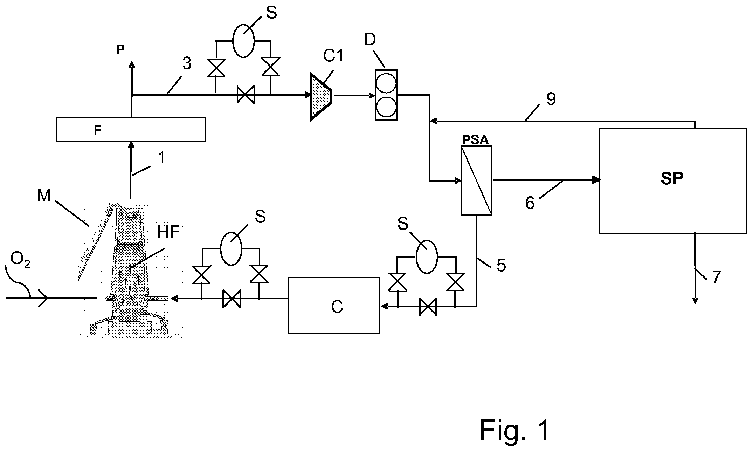

La Figure 1 représente une unité sidérurgique, par exemple un appareil Midrex, DRI ou COREX ® ou un haut fourneau intégré avec un appareil de production d'un fluide riche en CO₂. Dans le cas illustré d'un haut fourneau, le haut fourneau est alimenté par de l'oxygène et du charbon pulvérisé et du minerai de fer M ainsi que de coke. L'unité produit un gaz résiduaire 1 en quantité variable selon la charge de l'unité.

L'appareil de production de fluide riche en CO₂ comprend une unité d'adsorption qui peut être du type PSA, VSA ou VPSA et une unité de séparation SP. L'unité de séparation peut être une unité de séparation par lavage par solvant physique ou chimique, par exemple un lavage aux amines ou MDEA. Alternativement la séparation dans l'unité SP peut être effectuée par épuration à température subambiante (en dessous de 0°C) où s'effectue au moins une étape de refroidissement suivi d'au moins étape de séparation de phase. Le SP peut par exemple être une colonne de distillation précédé par un échangeur de chaleur et éventuellement un compresseur C2, illustré sur d'autres figures.

L'unité sidérurgique, par exemple un haut fourneau, HF produit un gaz résiduaire 1 comprenant de l'hydrogène, de l'azote, du dioxyde de carbone, de la vapeur d'eau et en composant principal du monoxyde de carbone.

Après filtration dans le filtre F, une partie P du gaz est purgée et le reste 3 est comprimé dans un compresseur C1 à une pression. Ensuite le gaz comprimé est séché dans le sécheur D et envoyé en amont de l'unité d'adsorption. L'unité produit un débit 6 enrichi en monoxyde de carbone et appauvri en dioxyde de carbone et un débit 5 appauvri en dioxyde de carbone et enrichi en monoxyde de carbone. Le débit 6 est envoyé après compression dans le compresseur C2 à une unité SP, pouvant comprendre une colonne de distillation ou un liquéfacteur pour produire un fluide enrichi, voire riche, en CO₂ 7, par exemple du CO₂ liquide. La présence du compresseur C2 est néanmoins facultatif. Le débit 9 est un gaz résiduaire contenant du monoxyde de carbone qui est renvoyé vers l'entrée de l'unité PSA. En l'absence du compresseur C2 ou même si ce compresseur est présent, il peut être envisagé de comprimer le débit 9 en amont de l'épuration par adsorption pour atteindre la pression du débit 3.

Le débit 5 enrichi en monoxyde de carbone est chauffé dans l'échangeur de chaleur C, de préférence de type Cowpers et envoyé au haut fourneau HF pour servir de carburant.

Pendant une première marche, celle de la marche nominale, le haut fourneau produit du gaz à une première pression basse et est comprimé par le compresseur C1 à entre 8 et 10 bars abs. Le débit comprimé a un premier débit et contient 45% mol. de monoxyde de carbone. Il est épuré dans l'unité PSA et le débit produit enrichi en monoxyde de carbone par rapport au premier débit est envoyé au haut fourneau. Le débit résiduaire 9 est recyclé du SP comme expliqué pour l'exemple général.

En cas de charge réduite du haut fourneau, pendant une deuxième marche, la pression du gaz 1 baisse à une pression plus basse que la première pression basse, son débit est réduit par moitié et la concentration en monoxyde de carbone est réduite à 40% mol. L'appareil continue à fonctionner. Comme le taux de compression du compresseur C1 est substantiellement constant, le gaz à l'entrée du PSA se trouve à entre 3 et 7 bars abs. Dans ce cas, le fonctionnement de l'unité PSA est dégradé, plus de monoxyde de carbone reste dans le débit 6 que pour l'exemple à pression plus élevée et le rendement en monoxyde de carbone pour le débit 5 chuterait, si le recyclage 9 ne venait pas rajouter le CO restant .Le débit 6, plus riche en CO que pour le cas précédent, est traité dans le SP et substantiellement tout le CO qu'il contient se trouve dans le débit 9.

Pour tenir compte de ces marches différentes, il sera nécessaire de produire le débit 9 à pression plus élevée pour la première marche que pour la deuxième marche. Pour ceci, il est possible soit de comprimer jusqu'à une pression plus élevée le débit 6 pendant la première marche, de comprimer jusqu'à une pression plus élevée le débit 9 pendant la première marche, soit de détendre le gaz 6 ou 9 pendant la deuxième marche.

A part ces grandes modifications de pressions entre une gamme de 3 et 7 bars et une gamme de 8 et 10 bars, la pression du débit 3 peut également subir de petites variations rapides de moins d'un bar qui peuvent perturber le fonctionnement de l'appareil d'épuration PSA.

Dans le but de réduire ces petites variations, le taux de compression du compresseur C1 peut être variable. Additionnellement ou alternativement une soufflante B peut être rajoutée en amont du compresseur C1. Une autre possibilité, illustrée dans la figure, consiste à installer un stockage S qui reçoit du gaz 3 et sert à ajuster la pression / débit d'entrée du compresseur C1, afin de servir de capacité tampon.

On note également la présence facultative de capacités tampon S en amont et en aval du chauffeur Cowpers C pour tenir compte des variations de débit et/ou de pression.

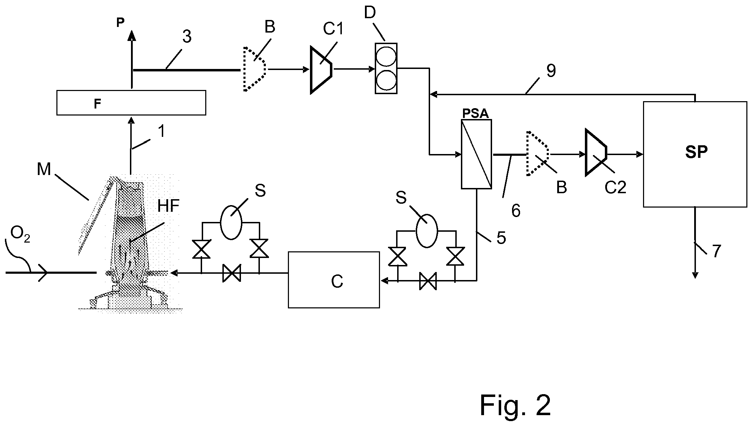

Pour la Figure 2 des soufflantes B peut être rajoutées en amont du compresseur C1 et en amont du compresseur C2.

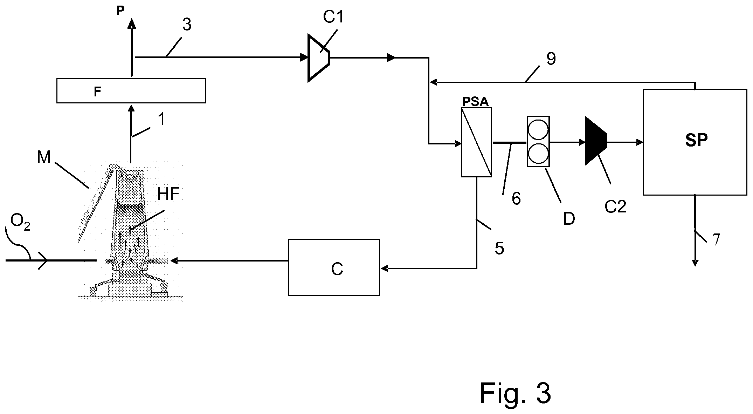

Pour la Figure 3, le sécheur D n'est plus en amont du compresseur C1 mais en amont du compresseur C2. Cette variante peut s'appliquer à toutes les figures.

Ainsi à cause du recyclage, il reste possible d'opérer le procédé à ces basses pressions engendrées par la charge réduite du haut fourneau.

Il sera éventuellement nécessaire de modifier le cycle (temps et pression des phases) entre la première marche et la deuxième marche.

Le gaz appauvri en dioxyde de carbone 5 peut éventuellement être envoyé à une unité sidérurgique autre que celle d'où provient le gaz résiduaire 1.

## Revendications

1. Procédé de production d'un fluide enrichi en dioxyde de carbone à partir d'un gaz résiduaire d'une unité sidérurgique (HF) contenant du dioxyde de carbone et du monoxyde de carbone dans lequel on comprime au moins une partie du gaz résiduaire dans un premier compresseur (C1), éventuellement on sèche le gaz résiduaire comprimé, on sépare le gaz résiduaire, éventuellement séché, par un procédé d'adsorption dans une unité d'adsorption (PSA) pour produire un gaz enrichi en dioxyde de carbone et appauvri en monoxyde de carbone (6) et un gaz appauvri en dioxyde de carbone et enrichi en monoxyde de carbone (5), on sépare dans une unité de séparation (SP) le gaz enrichi en dioxyde de carbone, pour produire un fluide enrichi en dioxyde de carbone et un gaz de recyclage (9) contenant du monoxyde de carbone, on sort le fluide enrichi en dioxyde de carbone comme produit (7), on recycle le gaz de recyclage de l'unité de séparation vers l'unité d'adsorption à la pression d'entrée de l'unité d'adsorption et on envoie au moins une partie du gaz appauvri en dioxyde de carbone à l'unité sidérurgique ou une autre unité sidérurgique, éventuellement sans l'avoir mélangé avec un autre fluide et de préférence après l'avoir réchauffée, pendant une première marche, qui est une marche nominale, le gaz résiduaire comprimé dans le premier compresseur (C1) a une première pression à la sortie du compresseur entre 8 et 15 bars abs, un premier débit et une première concentration en monoxyde de carbone et pendant une deuxième marche, qui est une marche de charge réduite pour l'unité sidérurgique, le gaz résiduaire comprimé dans le premier compresseur a une deuxième pression à la sortie du compresseur entre 3 et 7 bars abs, un deuxième débit inférieur au premier débit et une deuxième concentration en monoxyde de carbone inférieure à la première concentration et on maintient la deuxième pression et éventuellement la première pression constante en ajustant la pression de sortie du premier compresseur (C1).

2. Procédé selon la revendication 1 dans lequel au moins une partie du gaz de recyclage est recyclée à l'unité d'adsorption (PSA) à une pression égale à celle du refoulement du premier compresseur (C1) pour être séparée dans l'unité d'adsorption.

3. Procédé selon la revendication 2 dans lequel on comprime le gaz enrichi en dioxyde de carbone dans un deuxième compresseur (C2) en amont de l'unité de séparation ou on comprime le gaz de recyclage entre l'unité de séparation et l'unité d'adsorption.

4. Procédé selon l'une des revendications précédentes dans lequel l'unité de séparation (SP) opère à une température en dessous de 0°C par au moins une étape de refroidissement suivie d'au moins une étape de séparation de phases, pouvant être par exemple une unité de distillation.

5. Procédé selon l'une des revendications précédentes dans lequel on maintient la deuxième et éventuellement la première pression substantiellement constante en ajustant la pression de sortie du premier compresseur (C1), au moyen d'une soufflante connectée en amont de celui-ci.

6. Procédé selon la revendication 1 dans lequel on ajuste la pression de sortie du premier compresseur (C1) en envoyant le gaz résiduaire dans un stockage en amont du premier compresseur et en alimentant le premier compresseur à partir du stockage.

7. Procédé selon une des revendications précédentes dans lequel on modifie la pression du gaz de recyclage (9) pour qu'il soit à une pression plus élevée pendant la première marche et une pression plus basse pendant la deuxième marche.

8. Procédé selon une des revendications précédentes dans lequel l'unité d'adsorption (PSA) a un premier rendement de séparation de monoxyde de carbone pendant la première marche et un deuxième rendement de séparation de monoxyde de carbone pendant la deuxième marche, inférieur au premier rendement.

9. Procédé selon les revendications précédentes dans lequel le gaz résiduaire (1) sort de l'unité sidérurgique (HF) avec une pression variable.

10. Procédé selon l'une des revendications précédentes dans lequel l'au moins une partie du gaz appauvri en dioxyde de carbone est envoyée à l'unité sidérurgique ou une autre unité sidérurgique (HF), sans l'avoir mélangée avec un autre fluide.

11. Procédé selon l'une des revendications précédentes dans lequel on mélange le gaz de recyclage (9) au gaz résiduaire (3), éventuellement séché, en amont de l'unité d'adsorption.

## Patentansprüche

1. Verfahren zum Herstellen eines mit Kohlendioxid angereicherten Fluids, ausgehend von einem Kohlendioxid und Kohlenmonoxid enthaltenden Abgas einer eisenmetallurgischen Einheit (HF), wobei mindestens ein Teil des Abgases in einem ersten Kompressor (C1) komprimiert wird, das komprimierte Abgas gegebenenfalls getrocknet wird, das gegebenenfalls getrocknete Abgas in einer Absorptionseinheit (PSA) durch ein Absorptionsverfahren getrennt wird, um ein mit Kohlendioxid angereichertes und an Kohlenmonoxid abgereichertes Gas (6) und ein an Kohlendioxid abgereichertes und mit Kohlenmonoxid angereichertes Gas (5) herzustellen, das mit Kohlendioxid angereicherte Gas in einer Trenneinheit (SP) getrennt wird, um ein mit Kohlendioxid angereichertes Fluid und ein Kohlenmonoxid enthaltendes Rückführgas (9) herzustellen, das mit Kohlendioxid angereicherte Fluid als Produkt (7) entnommen wird, das Rückführgas aus der Trenneinheit bei dem Eingangsdruck der Absorptionseinheit zur Absorptionseinheit zurückgeführt wird, und mindestens ein Teil des an Kohlendioxid abgereicherten Gases zur eisenmetallurgischen Einheit oder einer weiteren eisenmetallurgischen Einheit geleitet wird, gegebenenfalls ohne es mit einem weiteren Fluid gemischt zu haben und vorzugsweise nachdem es wieder erhitzt wurde, während einer ersten Stufe, die eine nominale Stufe ist, das in dem ersten Kompressor (C1) komprimierte Abgas einen ersten Druck am Kompressorausgang zwischen 8 und 15 bar abs, einen ersten Volumenstrom und eine erste Kohlenmonoxidkonzentration aufweist, und während einer zweiten Stufe, die eine Stufe reduzierter Ladung für die eisenmetallurgische Einheit ist, das in dem ersten Kompressor komprimierte Abgas einen zweiten Druck am Kompressorausgang zwischen 3 und 7 bar abs, einen zweiten Volumenstrom, geringer als der erste Volumenstrom, und eine zweite Kohlenmonoxidkonzentration, geringer als die erste Kohlenmonoxidkonzentration, aufweist, und der zweite Druck und gegebenenfalls der erste Druck durch Anpassen des Ausgangsdrucks des ersten Kompressors (C1) konstant gehalten wird.

2. Verfahren gemäß Anspruch 1, wobei mindestens ein Teil des Rückführgases bei einem Druck gleich dem Förderdruck des ersten Kompressors (C1) zur Absorptionseinheit (PSA) zurückgeführt wird, um in der Absorptionseinheit getrennt zu werden.

3. Verfahren gemäß Anspruch 2, wobei das mit Kohlendioxid angereicherte Gas in einem der Trenneinheit vorgelagerten zweiten Kompressor (C2) komprimiert wird oder das Rückführgas zwischen der Trenneinheit und der Absorptionseinheit komprimiert wird.

4. Verfahren gemäß einem der vorstehenden Ansprüche, wobei die Trenneinheit (SP) bei einer Temperatur unter 0 °C durch mindestens einen Kühlschritt, gefolgt von mindestens einem Phasentrennungsschritt, der zum Beispiel eine Destillationseinheit sein kann, betrieben wird.

5. Verfahren gemäß einem der vorstehenden Ansprüche, wobei der zweite und gegebenenfalls der erste Druck durch Anpassen des Drucks am Ausgang des ersten Kompressors (C1) mittels eines mit diesem vorgelagert verbundenen Gebläses im Wesentlichen konstant gehalten wird.

6. Verfahren gemäß Anspruch 1, wobei der Ausgangsdruck des ersten Kompressors (C1) durch Leiten des Abgases in einen dem ersten Kompressor vorgelagerten Speicher und durch Speisen des ersten Kompressors aus dem Speicher angepasst wird.

7. Verfahren gemäß einem der vorstehenden Ansprüche, wobei der Druck des Rückführgases (9) modifiziert wird, damit er während des ersten Schritts bei einem höheren Druck und während des zweiten Schritts bei einem niedrigeren Druck vorliegt.

8. Verfahren gemäß einem der vorstehenden Ansprüche, wobei die Absorptionseinheit (PSA) während des ersten Schritts eine erste Kohlenmonoxid-Trennleistung und während des zweiten Schritts eine zweite Kohlenmonoxid-Trennleistung, geringer als die erste Leistung, aufweist.

9. Verfahren gemäß den vorstehenden Ansprüchen, wobei das Abgas (1) mit einem variablen Druck aus der eisenmetallurgischen Einheit (HF) austritt.

10. Verfahren gemäß einem der vorstehenden Ansprüche, wobei der mindestens eine Teil des an Kohlendioxid abgereicherten Gases zur eisenmetallurgischen Einheit oder einer weiteren eisenmetallurgischen Einheit (HF) geleitet wird, ohne es mit einem weiteren Fluid gemischt zu haben.

11. Verfahren gemäß einem der vorstehenden Ansprüche, wobei das Rückführgas (9) der Absorptionseinheit vorgelagert zu gegebenenfalls getrocknetem Abgas (3) gemischt wird.

## Claims

1. Method for producing a fluid enriched with carbon dioxide from a waste gas of a ferrous-metallurgy unit (HF) containing carbon dioxide and carbon monoxide wherein at least one portion of the waste gas is compressed in a first compressor (C1), optionally the dried waste gas is separated, the waste gas is separated, optionally dried, by means of an adsorption method in an adsorption unit (PSA) in order to produce a gas enriched with carbon dioxide and depleted of carbon monoxide (6) and a gas depleted of carbon dioxide and enriched with carbon monoxide (5), the gas enriched with carbon dioxide is separated in a separation unit (SP), in order to produce a fluid enriched with carbon dioxide and a recirculation gas (9) containing carbon monoxide, the fluid enriched with carbon dioxide exits as a product (7), the recirculation gas is recirculated from the separation unit toward the adsorption unit at the input pressure of the adsorption unit and at least one portion of the gas depleted of carbon dioxide is sent to the ferrous-metallurgy unit or another ferrous-metallurgy unit, optionally without having been mixed with another fluid and preferably after having heated it, during a first step, which is a nominal step, the waste gas compressed in the first compressor (C1) has a first pressure at the outlet of the compressor between 8 and 15 bars abs, a first flow rate and a first concentration in carbon monoxide and during a second step, which is a reduced load step for the ferrous-metallurgy unit, the waste gas compressed in the first compressor has a second pressure at the outlet of the compressor between 3 and 7 bars abs, a second flow rate less than the first flow rate and a second concentration in carbon monoxide less than the first concentration and the second pressure and optionally the first pressure are maintained constant by adjusting the output pressure of the first compressor (C1).

2. Method according to claim 1 wherein at least one portion of the recirculation gas is recirculated to the adsorption unit (PSA) at a pressure equal to that of the discharge of the first compressor (C1) in order to be separated in the adsorption unit.

3. Method according to claim 2 wherein the gas enriched with carbon dioxide is compressed in a second compressor (C2) upstream of the separation unit or the recirculation gas is compressed between the separation unit and the adsorption unit.

4. Method according to one of the preceding claims wherein the separation unit (SP) operates at a temperature below 0°C by at least one step of cooling followed by at least one step of separating phases, which for example can be a distillation unit.

5. Method according to one of the preceding claims wherein the second and optionally the first pressure are maintained substantially constant by adjusting the output pressure of the first compressor (C1), by means of a blower connected upstream of the latter.

6. Method according to claim 1 wherein the output pressure of the first compressor (C1) is adjusted by sending the waste gas into storage upstream of the first compressor and by supplying the first compressor from the storage.

7. Method according to one of the preceding claims wherein the pressure of the recirculation gas (9) is modified so that it is at a higher pressure during the first step and a lower pressure during the second step.

8. Method according to one of the preceding claims wherein the adsorption unit (PSA) has a first output of separation of carbon monoxide during the first step and a second output of separation of carbon monoxide during the second step, less than the first output.

9. Method according to the preceding claims wherein the waste gas (1) exits the ferrous-metallurgy unit (HF) with a variable pressure.

10. Method according to one of the preceding claims wherein the at least one portion of the gas depleted of carbon dioxide is sent to the ferrous-metallurgy unit or another ferrous-metallurgy unit (HF), without having mixed it with another fluid.

11. Method according to one of the preceding claims wherein the recirculation gas (9) is mixed with the waste gas (3), optionally dried, upstream of the adsorption unit.
